# EUROPÄISCHE PATENTSCHRIFT

(11) **EP 2 672 803 B1**
(45) Veröffentlichungstag und Bekanntmachung des Hinweises auf die Patenterteilung: **30.07.2014**
(21) Anmeldenummer: 12703768.7
(22) Anmeldetag: 06.02.2012
(51) Int. Cl.: A01C 7/04, A01C 7/10

(54) **SÄHERZÜBERWACHUNGSEINRICHTUNG, SÄHERZ UND EINZELKORNSÄMASCHINE**
SOWING HEART MONITORING DEVICE, SOWING HEART AND SINGLE GRAIN SOWING MACHINE
DISPOSITIF DE SURVEILLANCE DE DISTRIBUTEUR DE SEMOIR, DISTRIBUTEUR DE SEMOIR ET SEMOIR MONOGRAINE

(30) Priorität: 11.04.2011 DE 102011001949
(43) Veröffentlichungstag der Anmeldung: 18.12.2013
(73) Patentinhaber: Kverneland A/S, 4355 Kvernaland (NO); Fachhochschule Südwestfalen, 58644 Iserlohn (DE)
(72) Erfinder: SCHUMACHER, Ferdinand, 59510 Lippetal-Oestinghausen (DE); KRYBUS, Werner, 59505 Bad Sassendorf (DE)
(74) Vertreter: Becker, Thomas
(86) Internationale Anmeldenummer: PCT/EP2012/051967
(87) Internationale Veröffentlichungsnummer: WO 2012/139784

(56) Entgegenhaltungen:
- EP-A2- 1 882 405
- DE-A1-102007 048 941
- US-A1- 2007 266 917
- US-A1- 2011 046 776

## Beschreibung

Die Erfindung betrifft eine Säherzüberwachungseinrichtung gemäß Patentanspruch 1, ein Säherz gemäß Patentanspruch 8 und eine Einzelkornsämaschine gemäß Patentanspruch 10.

Überwachungseinrichtungen zur Überwachung der Funktion von Einzelkornsämaschinen sind in verschiedenen Ausführungen bekannt. Häufig wird die Überwachung wegen der einfachen Zugänglichkeit an einem Förderkanal durchgeführt, wie beispielsweise bei der Druckschrift WO 2005/096799 A1 oder der WO 2005/096798 A1. Eine weitere Überwachungseinrichtung ist aus der US 2007/266917 bekannt.

Überwachungseinrichtungen dienen unter anderem der Steuerung und Regelung sowie der Überprüfung der korrekten Funktion der Sägeräte. Es besteht die Forderung, dass die Überwachung schnell anspricht und einwandfrei sowie auf einfache Weise funktioniert. Weiterhin soll die Überwachungseinrichtung möglichst kostengünstig und wartungsfrei arbeiten.

Aufgabe der vorliegenden Erfindung ist es daher, eine Überwachungseinrichtung anzugeben, mit der eine schnell ansprechende, zuverlässige und kostengünstig herstellbare Überwachung von Sägeräten bei Einzelkornsämaschinen ermöglicht wird.

Diese Aufgabe wird mit den Merkmalen der Patentansprüche 1, 8 und 10 gelöst.

Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren angegebenen Merkmalen.

Grundidee der vorliegenden Erfindung ist es, eine Überwachungseinrichtung in das Säherz integrierbar auszugestalten, so dass die Überwachung der Saatgutausbringung unmittelbar an dem für die Vereinzelung zuständigen Organ, nämlich dem Säherz, durchgeführt wird. Ein weiterer Aspekt der vorliegenden Erfindung ist es dabei, die Überwachung kostengünstig, schnell ansprechend und Platz sparend durch eine Zeilenkamera, insbesondere durch reine Kontrastmessung, vorzusehen. Besonders vorteilhaft an der vorliegenden Erfindung ist es, dass die Überwachung nur von einer Seite der Säscheibe erfolgen kann, nämlich insbesondere durch Reflexionsmessung. Mit anderen Worten: von einer Strahlungsquelle auf die Säscheibe gerichtete elektromagnetische Wellen werden von der Säscheibe reflektiert und nach Reflexion von der Zeilenkamera erfasst, und zwar in dem Bereich, in welchem das Saatgut auf der Säscheibe gefördert wird. Die Zeilenkamera wird entsprechend auf die Reflexionsfläche der Säscheibe fokussiert und die von der Zeilenkamera erzeugten Impulse werden durch eine Auswerteeinheit ausgewertet, wobei deutlich unterschiedliche Impulse an den Sälöchern erhalten werden, je nachdem, ob kein Säkorn, ein oder zwei Säkörner an dem Säloch anhaften. Somit kann die Belegung jedes Säloches unmittelbar nach Erfassung, also in-line, ausgewertet werden.

Gemäß einer besonders vorteilhaften Ausführungsform der Erfindung ist vorgesehen, dass die Erfassungsrichtung und die Strahlungsrichtung gleichwinklig gegenüber der Reflexionsfläche anordenbar sind, insbesondere vorgegeben durch Befestigungsmittel des Gehäuses am Säherz und die Anordnung der Zeilenkamera und der Strahlungsquelle im Gehäuse. Auf diese Weise erfolgt eine reproduzierbare Beaufschlagung der Zeilenkamera mit den von der Strahlungsquelle abgegebenen und an der Reflexionsfläche reflektierten elektromagnetischen Wellen.

Indem das Gehäuse gegenüber der Umgebung dicht ausgebildet ist, insbesondere dichtend an das Säherz anschließbar ist, wird die Zeilenkamera (und auch die Strahlungsquelle) wirkungsvoll vor Staub und/oder Feuchtigkeit und/oder Streulicht geschützt. Somit kann ein langer und störungsfreier Betrieb gewährleistet werden. Gemäß einer Weiterbildung der vorliegenden Erfindung ist vorgesehen, dass zwischen der Zeilenkamera und der Reflexionsfläche eine die elektromagnetischen Wellen transmittierende Scheibe, insbesondere zur Abdichtung des Gehäuses gegenüber der Umgebung, vorgesehen ist. Durch eine Scheibe kann die beim Durchtritt der elektromagnetischen Wellen an der Scheibe auftretende Lichtbrechung minimiert werden und auch mit in die Auswertung einfließen. Dabei ist es besonders vorteilhaft, wenn die Scheibe aus einem Material mit einem Brechungsindex < 1,6, insbesondere < 1,5 (λ = 589 nm), vorzugsweise aus Polymetylmethacrylat (Plexiglas) gebildet sind. Der Vorteil von Polymetylmethacrylat sind dessen elastische Eigenschaften und bedingte Schlagfestigkeit sowie dessen gute thermische Eigenschaften. Besonders vorteilhaft ist die gute Transmissionseigenschaft gegenüber Licht. Alternativ ist erfindungsgemäß Polycarbonat als Material denkbar.

Indem die Zeilenkamera eine Belegung der Sälöcher der rotierenden Säscheibe mit Saatkörnern erfassend ausgebildet ist, lassen sich sehr gut Rückschlüsse auf die richtige Einstellung des Säherzes ziehen. Die Einstellung ist insbesondere von den unterschiedlichen Saatgütern, aber auch von den Umgebungsbedingungen abhängig.

Besonders kostengünstig und wirksam lässt sich die vorliegende Erfindung realisieren, wenn als Strahlungsquelle eine Lichtquelle, insbesondere eine LED, vorzugsweise eine rote LED, verwendet wird. Die Verwendung einer farbigen LED ist besonders vorteilhaft, weil insbesondere in Kombination mit einem korrespondierenden Filter, der Fremdlichtabstand optimiert werden kann.

Gemäß einer weiteren vorteilhaften Ausführungsform der Erfindung ist zwischen der Reflexionsfläche und der Zeilenkamera, insbesondere an der Zeilenkamera, ein für die elektromagnetischen Wellen selektiver Filter vorgesehen. Somit können Fremdlichteinflüsse weiter reduziert werden.

Als eigenständige Erfindung wird ein Säherz für eine Einzelkornsämaschine mit einer in einer Rotationsrichtung R rotierbaren Säscheibe mit einer Vielzahl von konzentrisch zur Säscheibe verteilten Sälöchern zur Anhaftung von einzelnen Säkörnern, insbesondere durch Unterdruck, entlang mindestens eines konzentrischen Sälochkreises und mit einer oben beschriebenen Säherzüberwachungseinrichtung angesehen. Indem die Säherzüberwachungseinrichtung an einem Umfangsrand des Säherzes, insbesondere an Befestigungsmitteln zur Fixierung des Säherzes an der Einzelkornsämaschine angebracht ist, ist die Säherzüberwachungseinrichtung auf einfache, platzsparende und kostengünstige Weise integrierbar. Das Säherz muss dabei konstruktiv nur geringfügig geändert werden, nämlich in einem Teilbereich der Hälfte des Säherzes.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1a und 1b: perspektivische Ansichten eines Einzelkornsäaggregats einer gattungsgemäßen Einzelkornsämaschine in Fahrtrichtung von schräg hinten (Figur 1a) und von schräg vorne (Figur 1b),
- Figur 2: eine perspektivische Ansicht eines erfindungsgemäßen Säherzes,

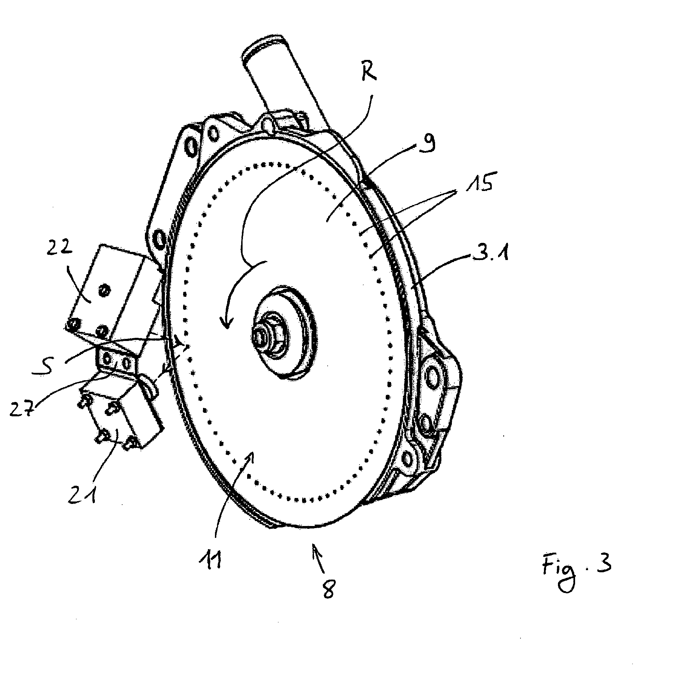

- Figur 3: eine perspektivische Ansicht einzelner Teile des Säherzes gemäß Figur 2,

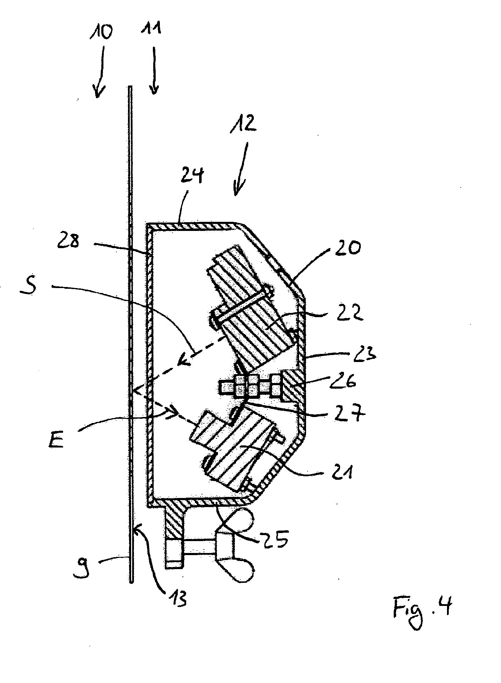

- Figur 4: eine Querschnittsansicht durch eine erfindungsgemäße Säherzüberwachungseinrichtung und deren Position gegenüber einer Säscheibe des Säherzes gemäß Figur 1,
- Figur 5a: eine Aufnahme eines Abschnitts der Säscheibe und
- Figur 5b: ein von der Säherzüberwachungseinrichtung erfasstes Bild.

In den Figuren sind gleiche Bauteile und Bauteile mit der gleichen Funktion mit den gleichen Bezugszeichen gekennzeichnet.

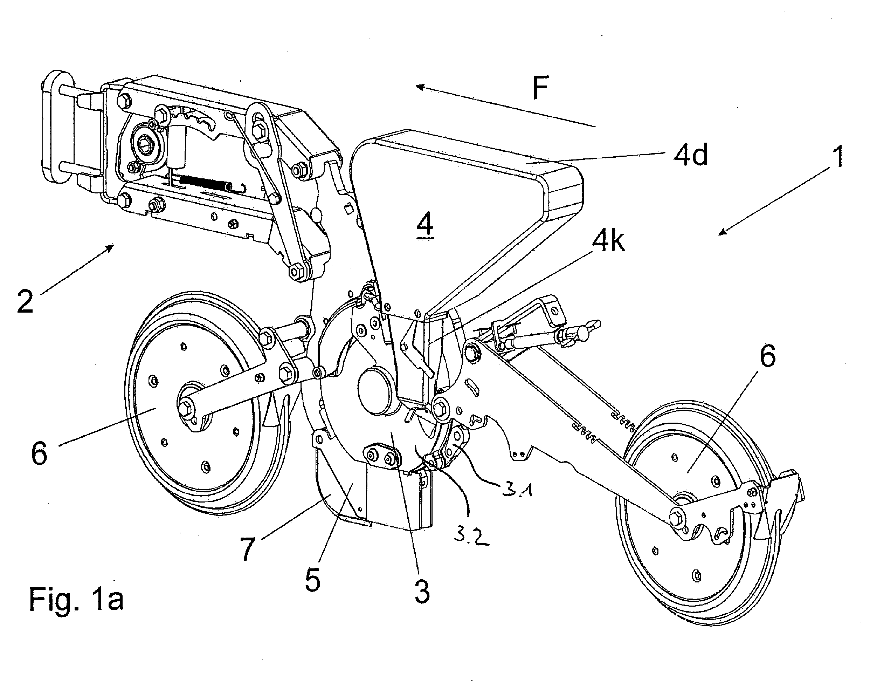

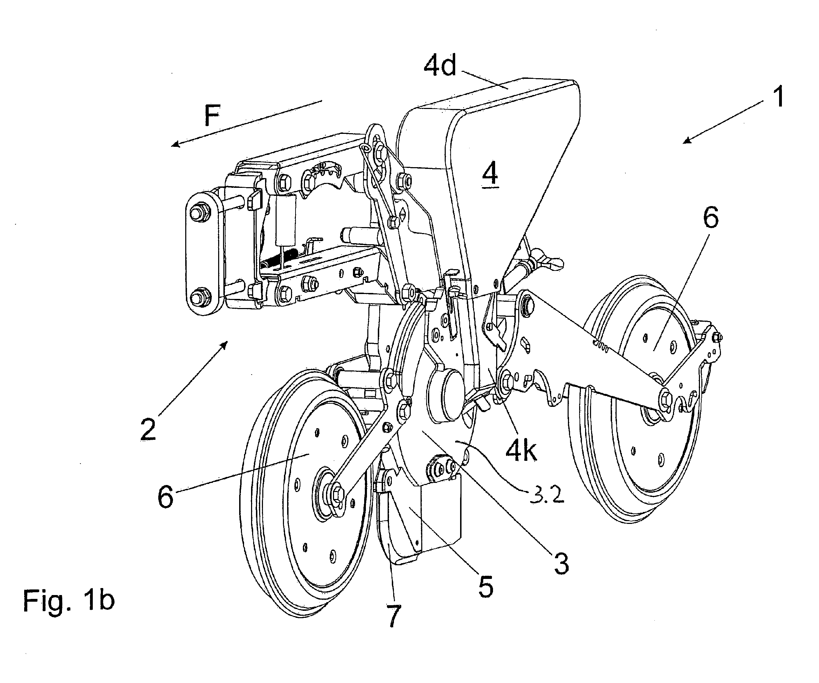

In den Figuren 1a und 1b ist ein Säaggregat 1 einer erfindungsgemäßen Einzelkornsämaschine dargestellt, das über einen Arm 2 am Rahmen der Einzelkornsämaschine befestigt ist. Dementsprechend ist die Fahrtrichtung bei Betrieb der Einzelkornsämaschine in der durch den Pfeil F angegebenen Richtung.

An dem Arm 2, der eine Schwenkbewegung, vorzugsweise als Vertikalbewegung durch Ausbildung des Arms 2 als Parallelogrammarm, zulässt, sind ein Säherz 3, ein oberhalb des Säherzes 3 angeordneter Tank 4, ein unterhalb des Säherzes 3 angeordnetes Säschar 5 sowie zwei in Fahrtrichtung F vor und hinter dem Säherz 3 angeordnete, gegenüber dem Säherz 3 schwenkbare Laufräder 6 angebracht. Der Tank 4 ist über einen Deckel 4d verschließbar und mit Saatgut 16 befüllbar, das wiederum über einen Kanal 4k seitlich in das Säherz 3 geführt wird.

Das Saatgut 16 wird im Säherz 3 vereinzelt und über das Säschar 5 in eine durch eine Scharspitze 7 des Säschars 5 geöffnete Furche im Ackerboden abgelegt.

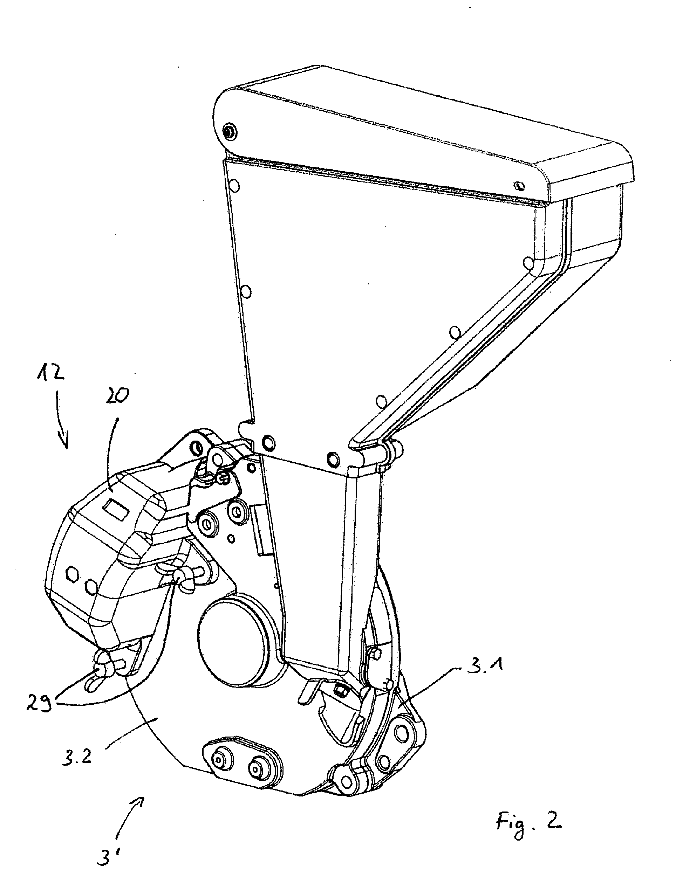

In Figur 2 ist ein erfindungsgemäßes Säherz 3' gezeigt, das im Unterschied zu dem Säherz 3 gemäß Figuren 1a und 1b an einem in Fahrtrichtung F vorne liegenden Bereich des Säherzes 3' eine Säherzüberwachungseinrichtung 12 aufweist. Die Säherzüberwachungseinrichtung 12 ist insbesondere am Umfang des Säherzes 3' angeordnet, insbesondere in dem Bereich, an dem der Arm 2 an dem Säherz 3' angebracht ist.

Die Säherzen 3, 3' weisen zwei Hälften 3.1 und 3.2 auf, wobei ein durch die beiden Hälften 3.1 und 3.2 umschlossener Arbeitsraum 8 durch eine Säscheibe 9 in eine Druckseite 10 und eine Saatgutseite 11 unterteilt wird.

Konzentrisch zur kreisförmigen Säscheibe 9 sind am Umfang der Säscheibe 9 Sälöcher 15 verteilt (Sälochkreis), durch welche die Druckseite 10 und die Saatgutseite 11 verbunden sind.

Die Sälöcher 15 weisen je nach zu vereinzelndem Saatgut 16 geeignete Durchmesser auf, die im Bereich von 0,5mm bis 3mm liegen können.

Die Säscheibe 9 transportiert das Saatgut 16 durch Unterdruckanhaftung einzelner Saatkörner 16 an den Sälöchern 15 mittels Rotation der Säscheibe 9 in eine Rotationsrichtung R von der Aufnahme bis zur Abgabe jedes Säkorns 16.

Idealerweise nimmt jedes Säloch 15 ein einziges Saatkorn 16 auf, was in der Praxis aber nicht immer zu 100% funktioniert. Je nach verwendetem Saatgut und abhängig von der Einstellung des Säherzes 3' und der Fahrgeschwindigkeit kommt es vor, dass ein Säloch 15 kein Säkorn 16 oder sogar zwei Säkörner 16 aufnimmt. Dies führt an der entsprechenden Sästelle im Ackerboden dazu, das entweder keine Pflanze entsteht oder zwei Pflanzen, die nicht ausreichend mit Nährstoffen versorgt werden und daher unterentwickelt bleiben.

Besonders kritisch ist es jedoch, wenn einzelne Säaggregate 1 einer Einzelkornsämaschine vollständig ausfallen, beispielsweise durch eine Funktionsstörung oder hohen Verschmutzungsgrad.

Zur frühzeitigen Erkennung einer Funktionsstörung und darüber hinaus gegebenenfalls zur Steuerung/Regelung jedes einzelnen Säherzes 3' ist die Säherzüberwachungseinrichtung 12 vorgesehen.

Die Säherzüberwachungseinrichtung 12 besteht aus einem am Säherz 3' befestigbaren Gehäuse 20 zur Aufnahme einer Zeilenkamera 21 und einer Strahlungsquelle 22. Das Gehäuse 20 schützt die Zeilenkamera 21 und die Strahlungsquelle 22 vor Verschmutzung und anderen Umgebungseinflüssen. Das Gehäuse 20 dichtet den inneren Hohlraum des Gehäuses 20 sowohl gegen Staub und Feuchtigkeit als auch gegen Licht zumindest an einer zur Säscheibe 9 abgewandten Rückseite 23 sowie einer Oberseite 24 und einer Unterseite 25 des Gehäuses ab.

Im Inneren des Gehäuses 20 ist an der Rückseite 23 eine in das Innere vorspringende Verstärkung 26 zur Befestigung der Zeilenkamera und der Strahlungsquelle 22 vorgesehen. Die Befestigung erfolgt über ein Winkelblech 27, an dessen einem Ende die Zeilenkamera 21 angewinkelt angebracht ist. An dem anderen, gegenüberliegenden Ende des Winkelblechs 27 ist die Strahlungsquelle 22 angewinkelt angebracht. Die Strahlungsquelle 22 umfasst insbesondere eine LED und strahlt in einer Strahlungsrichtung S Licht als elektromagnetische Wellen aus. Dieses trifft nach Durchtritt durch eine transmittierende Scheibe 28, gegebenenfalls unter geringfügiger Brechung, überwiegend auf eine Reflexionsfläche 13 der Säscheibe 9 und wird dort reflektiert. Die Säherzüberwachungseinrichtung 12 ist an der Saatgutseite 11 angeordnet, so dass auch die Reflexionsfläche 13 auf der Saatgutseite 11 der Säscheibe 9 angeordnet ist. Die Strahlungsquelle kann als eine mögliche Ausführungsform eine LED sein, welche rotes Licht ausstrahlt.

Die Strahlungsquelle 22 ist mittels des Winkelblechs 27 so angewinkelt, dass die von der Strahlungsquelle 22 in Strahlungsrichtung S ausgesendeten elektromagnetischen Wellen die Sälöcher 15 der Säscheibe 9 auf der Reflexionsfläche 13 erfassen. Die elektromagnetischen Wellen werden von der Reflexionsfläche 13 in Richtung der gleichwinklig zur Strahlungsquelle 22 gegenüber der Reflexionsfläche 13 ausgerichteten Zeilenkamera 21 reflektiert, und zwar in einer Erfassungsrichtung E. Die elektromagnetischen Wellen werden von der Reflexionsfläche 13 anders reflektiert als von den Sälöchern 15. Je nachdem, ob an dem erfassten Säloch 15 keins, eins oder zwei Säkörner 16 anhaften, ergibt sich für jeden Fall eine unterschiedliche Beeinflussung der reflektierten elektromagnetischen Wellen. Die reflektierten elektromagnetischen Wellen werden von der Zeilenkamera 21 erfasst und von einer nicht dargestellten Auswerteeinheit, die entweder in der Zeilenkamera 21 sitzt oder über eine Leitung mit der Zeilenkamera 21 verbunden beispielsweise in einem Zentralrechner im Führerhaus der Zugmaschine angeordnet sein kann. Die Auswerteeinheit wertet die von der Zeilenkamera 21 auf Grund der unterschiedlichen elektromagnetischen Wellen erfassten Signale aus. Hierbei kann es vorteilhaft sein, nur Kontraste zu erfassen, da die glatte, metallische Säscheibe 9 als ideale Reflexionsfläche 13 einen zu den Sälöchern 15 und Säkörnern 16 sehr unterschiedlichen Kontrastwert aufweist.

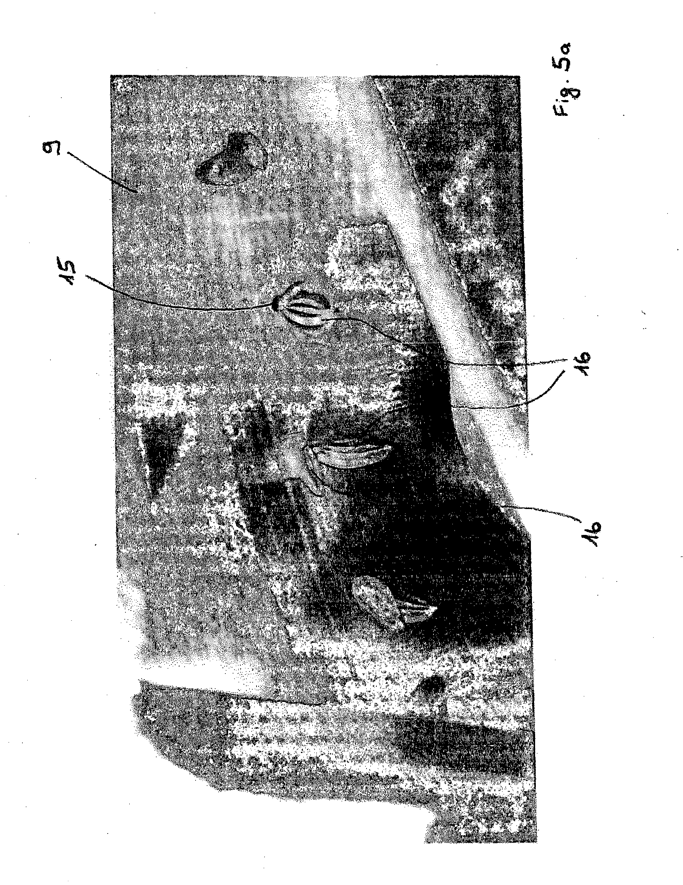

Figur 5a zeigt eine Aufnahme von Säkörnern 16 (hier Petersiliensamen), die an den Sälöchern 15 der Säscheibe 9 anhaften. An dem in der Mitte abgebildeten Säloch 15 sind zwei Säkörner 16 aufgenommen, während an dem rechts davon angeordneten Säloch 15 ein Säkorn 16 anhaftet.

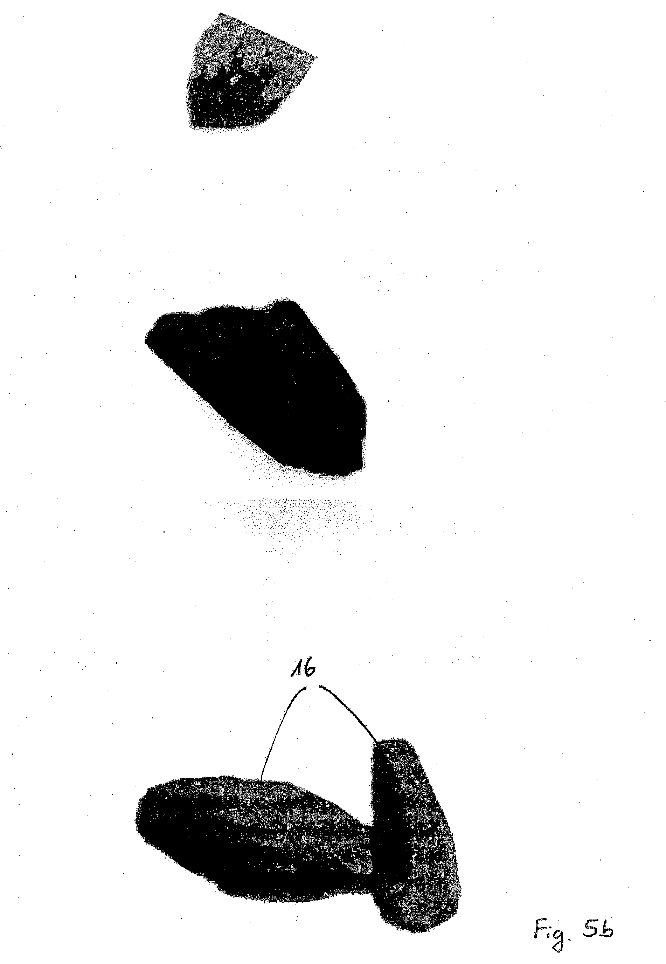

Die Zeilenkamera 21 erfasst ein in Figur 5b dargestelltes Bild, das nur aus Kontrastwerten besteht und durch die Auswerteeinheit einfach auswertbar ist. Bei der Auswertung wird anhand der Kontrastwerte zwischen der Säscheibe und den Saatkörnern bzw. dem Säloch unterschieden und die Fläche der dunklen Objekte (d.h. Saatkörner bzw. Säloch) ermittelt. Bei zwei Säkörnern 16 ergibt sich im Vergleich zu einem Säkorn 16 eine wesentlich größere Fläche und diese ist wiederum wesentlich größer als die Fläche eines nicht belegten Sälochs 15. Zusätzlich zu der Auswertung der Fläche können auch weitere Merkmale wie z.B. Exzentrizität oder Kompaktheit zur Unterscheidung zwischen Säloch, einem Saatkorn und zwei Saatkörnern verwendet werden.

Die Zeilenkamera 21 misst kontinuierlich die Kontrastwerte eines Abschnitts der vorbeirotierenden Säscheibe 9 im Bereich der Sälöcher 15 und bei jedem Säloch 15 ergibt sich ein Anstieg der Kontrastwerte, je nachdem, ob das Säloch 15 nicht, mit einem oder mit zwei Saatkörnern 16 belegt ist.

Die Auswerteeinheit bildet im Bereich jedes Sälochs 15 eine Untersuchungsgesamtheit für die statistische Auswertung. Da jedes Säkorn (siehe Figur 5a) gegenüber der Zeilenkamera 21 eine andere Ausrichtung haben kann und die Säkörner 16 unterschiedlich sein können, ergibt sich für die Fälle des Anhaftens eines Säkorns 16 oder zweier Säkörner 16 eine mehr oder weniger große Abweichung (je nach Saatgut) bei den erfassten Werten. Soweit kein Säkorn 16 an dem erfassten Säloch 15 anhaftet, ist die Abweichung sehr gering, da die Fertigungsgenauigkeit der Sälöcher 15 relativ hoch ist. Eine nennenswerte Abweichung ergibt sich allenfalls durch anhaftenden Schmutz.

Bei der statistischen Auswertung der Flächen bzw. weiterer Merkmale der detektierten Objekte ist es vorteilhaft, Extremwerte unberücksichtigt zu lassen. Anschließend kann der Mittelwert der Untersuchungsgesamtheit gebildet werden. Abhängig für verschiedene saatgüterhinterlegten Werten und ermittelten Standardabweichungen können Grenzwerte in der Auswerteeinheit hinterlegt werden, die insbesondere dem zwei- oder dreifachen der Standardabweichung entsprechen. Auf diese Weise können die für jede Grundgesamtheit ermittelten Werte von der Auswerteeinheit einem der drei Fälle keine Belegung, ein Säkorn 16 oder zwei Säkörner 16 zugeordnet werden.

Die Scheibe 28 ist ein Teil des Gehäuses 20 und diese dichtet das Innere des Gehäuses 20 gegenüber der Umgebung ab. Die Scheibe 28 ist parallel zu der Reflexionsfläche 13 ausgerichtet und vorzugsweise aus Plexiglas gebildet. Die Zeilenkamera 21 kann so geregelt sein, dass bei zunehmender Verschmutzung oder sonstiger Veränderung der Eigenschaften der Scheibe 28 automatisch die Belichtungszeit der Zeilenkamera 21 beziehungsweise die von der Lichtquelle abgegebene Strahlungsleistung erhöht wird. Soweit die Integrationszeit oder Strahlungsleistung nicht weiter erhöht werden können, kann eine Fehlermeldung ausgegeben werden, damit eine Reinigung der Scheibe 28 oder ein Austausch der Scheibe 28 erfolgen kann.

Gemäß einer bevorzugten Ausführungsform emittiert die Strahlungsquelle 22 rotes Licht in Strahlungsrichtung S, insbesondere durch Vorsehen einer roten LED. Die an der Reflexionsfläche 13 reflektierten elektromagnetischen Wellen werden durch einen an der Zeilenkamera 21 angebrachten Filter gefiltert, so dass trotz des Gehäuses 20, gegebenenfalls über die Scheibe 28, eindringendes Fremdlicht einen geringstmöglichen Einfluss auf die Auswertung hat.

Die Befestigung der Säüberwachungseinrichtung erfolgt über Befestigungsmittel 29 (hier Flügelschrauben) an der Hälfte 3.2.

### Bezugszeichenliste

- 1: Säaggregat
- 2: Arm
- 3, 3': Säherz
- 3.1: Hälfte
- 3.2: Hälfte
- 4: Tank
- 4d: Deckel
- 4k: Kanal
- 5: Säschar
- 6: Laufräder
- 7: Scharspitze
- 8: Arbeitsraum
- 9: Säscheibe
- 10: Druckseite
- 11: Saatgutseite
- 12: Säherzüberwachungseinrichtung
- 13: Reflexionsfläche
- 15: Sälöcher
- 16: Saatgut/Säkörner
- 20: Gehäuse
- 21: Zeilenkamera
- 22: Strahlungsquelle
- 23: Rückseite
- 24: Oberseite
- 25: Unterseite
- 26: Verstärkung
- 27: Winkelblech
- 28: Scheibe
- 29: Befestigungsmittel
- S: Strahlungsrichtung
- E: Erfassungsrichtung

## Patentansprüche

1. Säherzüberwachungseinrichtung zum Anschluss an ein Säherz (3') und zur Überwachung des Säherzes (3') mit
- einer Zeilenkamera (21) mit einer Erfassungsrichtung (E),
- einem am Säherz (3') befestigbaren Gehäuse (20) zur Aufnahme der Zeilenkamera (21) und
- einer Strahlungsquelle (22) zur Erzeugung von durch die Zeilenkamera (21) erfassbaren elektromagnetischen Wellen mit einer Strahlungsrichtung (S),
wobei die Säherzüberwachungseinrichtung (12) so ausgebildet ist, dass von der Strahlungsquelle (22) erzeugte elektromagnetische Wellen nach Reflexion an einer Reflexionsfläche (13) einer rotierbaren Säscheibe (9) des Säherzes (3') von der Zeilenkamera (21) erfassbar und von einer Auswerteeinheit auswertbar sind.

2. Säherzüberwachungseinrichtung nach Anspruch 1, bei der die Erfassungsrichtung (E) die Strahlungsrichtung (S) gleichwinklig gegenüber der Reflexionsfläche (13) anordenbar sind, insbesondere vorgegeben durch Befestigungsmittel (29) des Gehäuses (20) am Säherz (3') und die Anordnung der Zeilenkamera (21) und der Strahlungsquelle (22) im Gehäuse (20).

3. Säherzüberwachungseinrichtung nach einem der vorhergehenden Ansprüche, bei der das Gehäuse (20) gegenüber der Umgebung dicht ausgebildet ist, insbesondere dichtend an das Säherz (3') anschließbar ist.

4. Säherzüberwachungseinrichtung nach einem der vorhergehenden Ansprüche, bei der zwischen der Zeilenkamera (21) und der Reflexionsfläche (13) eine die elektromagnetischen Wellen transmittierende Scheibe (28), insbesondere zur Abdichtung des Gehäuses (20) gegenüber der Umgebung, vorgesehen ist.

5. Säherzüberwachungseinrichtung nach einem der vorhergehenden Ansprüche, bei der die Zeilenkamera (21) eine Bewegung der Sälöcher (15) der rotierenden Säscheibe (9) mit Saatkörnern (16) erfassend ausgebildet ist.

6. Säherzüberwachungseinrichtung nach einem der vorhergehenden Ansprüche, bei der die Strahlungsquelle (22) eine Lichtquelle, insbesondere eine LED, vorzugsweise eine rote LED, ist.

7. Säherzüberwachungseinrichtung nach einem der vorhergehenden Ansprüche, bei der zwischen der Reflexionsfläche (13) und der Zeilenkamera (21), insbesondere an der Zeilenkamera (21), ein für die elektromagnetischen Wellen selektiver Filter vorgesehen ist.

8. Säherz für eine Einzelkornsämaschine mit
- einer in einer Rotationsrichtung (R) rotierbaren Säscheibe (9) mit einer Vielzahl von konzentrisch zur Säscheibe (9) verteilten Sälöchern (15) zur Anhaftung von einzelnen Säkörnern (16) entlang mindestens eines konzentrischen Sälochkreises und
- einer Säherzüberwachungseinrichtung (12) nach einem der vorhergehenden Ansprüche.

9. Säherz nach Anspruch 8, bei dem die Säherzüberwachungseinrichtung (12) an einem Umfangsrand des Säherzes (3'), insbesondere an Befestigungsmitteln (29) zur Fixierung des Säherzes (3') an der Einzelkornsämaschine, angebracht ist.

10. Einzelkornsämaschine mit einem Säherz (3') nach Anspruch 8 oder 9.

## Claims

1. A sowing heart monitoring apparatus for connection to a sowing heart (3') and for monitoring of the sowing heart (3') with
- a line camera (21) with one detection direction (E),
- a housing (20) which can be attached to the sowing heart (3') for accommodating the line camera (21) and
- a radiation source (22) for generating electromagnetic waves which can be detected by the line camera (21) with one radiation direction (S),
the sowing heart monitoring apparatus (12) being made such that electromagnetic waves which have been generated by the radiation source (22) can be detected by the line camera (21) after reflection on one reflection surface (13) of a rotating sowing disc (9) of the sowing heart (3') and can be evaluated by an evaluation unit.

2. The sowing heart monitoring apparatus as claimed in Claim 1, wherein the detection direction (E) [and] the radiation direction (S) can be arranged at the same angle to the reflection surface (13), especially dictated by fasteners (29) of the housing (20) on the sowing heart (3') and the arrangement of the line camera (21) and the radiation source (22) in the housing (20).

3. The sowing heart monitoring apparatus as claimed in one of the preceding claims, wherein the housing (20) is made tight relative to the environment, especially is sealable onto the sowing heart (3').

4. The sowing heart monitoring apparatus as claimed in one of the preceding claims, wherein between the line camera (21) and the reflection surface (13) there is a disk (28) which transmits the electromagnetic waves, especially for sealing of the housing (20) relative to the environment.

5. The sowing heart monitoring apparatus as claimed in one of the preceding claims, wherein the line camera (21) is made to detect a movement of the sowing holes (15) of the rotating sowing disc (9) with seed grains (16).

6. The sowing heart monitoring apparatus as claimed in one of the preceding claims, wherein the radiation source (22) is a light source, in particular an LED, preferably a red LED.

7. The sowing heart monitoring apparatus as claimed in one of the preceding claims, wherein between the reflection surface (13) and the line camera (21), especially on the line camera (21), there is a filter which is selective for the electromagnetic waves.

8. A sowing heart for a single-seed drill with
- a sowing disc (9) which can be rotated in one direction of rotation (R) with a plurality of sowing holes (15) which are distributed concentrically to the sowing disc (9), for adherence of individual seed grains (16) along at least one concentric sowing hole circle and
- a sowing heart monitoring apparatus (12) according to one of the preceding claims.

9. The sowing heart as claimed in Claim 8, in which the sowing heart monitoring apparatus (12) is attached on one peripheral edge of the sowing heart (3'), especially on fasteners (29) for fixing of the sowing heart (3') on the single-seed drill.

10. A single-seed drill with a sowing heart (3') as claimed in Claim 8 or 9.

## Revendications

1. Dispositif de supervision de semoir à raccorder sur un semoir (3') et pour superviseur le semoir (3') comportant :
- une caméra linéaire (21) avec un dispositif de détection (E),
- un logement (20) fixable sur le semoir (3') pour renfermer la caméra linéaire (21) et
- une source de rayonnement (22) pour générer des ondes électromagnétiques détectables par la caméra linéaire (21) avec un dispositif de rayonnement (S),
dans lequel le dispositif de supervision de semoir (12) est conçu de telle sorte que les ondes électromagnétiques générées par la source de rayonnement (22) puissent être détectées après réflexion sur une surface réfléchissante (13) d'un disque de semis rotatif (9) du semoir (3') par la caméra linéaire (21) et puissent être évaluées par une unité d'évaluation.

2. Dispositif de supervision de semoir selon la revendication 1, dans lequel le dispositif de détection (E) et le dispositif de rayonnement (S) peuvent être disposés à angle égal par rapport à la surface réfléchissante (13), notamment prescrit par un moyen de fixation (29) du logement (20) sur le disque de semis (3') et la disposition de la caméra linéaire (21) et de la source de rayonnement (22) dans le logement (20).

3. Dispositif de supervision de semoir selon une des revendications précédentes, dans lequel le logement (20) est conçu de manière étanche par rapport à l'environnement ambiant, notamment peut être raccordé de manière étanche au semoir (3').

4. Dispositif de supervision de semoir selon une des revendications précédentes, dans lequel entre la caméra linéaire (21) et la surface réfléchissante (13) un disque (28) transmettant les ondes électromagnétiques, notamment pour isoler de manière étanche le logement (20) par rapport à l'environnement ambiant, est prévu.

5. Dispositif de supervision de semoir selon une des revendications précédentes, dans lequel la caméra linéaire (21) est conçue de manière à détecter un mouvement des trous de semis (15) du disque de semis rotatif (9) avec des semences (16).

6. Dispositif de supervision de semoir selon une des revendications précédentes, dans lequel la source de rayonnement (22) est une source lumineuse, notamment une LED, de préférence une LED rouge.

7. Dispositif de supervision de semoir selon une des revendications précédentes, dans lequel entre la surface réfléchissante (13) et la caméra linéaire (21), notamment sur la caméra linéaire (21), est filtre sélectif pour les ondes électromagnétiques est prévu.

8. Semoir pour un semoir monograine comportant
- un disque de semis (9) rotatif dans une direction de rotation (R) comportant une pluralité de trous de semis (15) répartis concentriquement au disque de semis (9) pour faire adhérer des semences individuelles (16) le long d'au moins un cercle de trou de semis concentrique et
- un dispositif de supervision de semoir (12) selon une des revendications précédentes.

9. Semoir selon la revendication 8, dans lequel le dispositif de supervision de semoir (12) est monté sur un bord circonférentiel du disque de semis (3'), notamment sur des moyens de fixation (29) pour fixer le disque de semis (3') sur le semoir monograin.

10. Semoir monograin comportant un semoir (3') selon la revendication 8 ou 9.
